# EUROPEAN PATENT SPECIFICATION

(11) **EP 4 505 092 B1**
(45) Date of publication and mention of the grant of the patent: **11.03.2026**
(21) Application number: 23734711.7
(22) Date of filing: 04.04.2023
(51) Int. Cl.: F16G 5/08, C08K 3/00, F16G 5/20

(54) **CVT BELT**
CVT-RIEMEN
COURROIE POUR TRANSMISSION À VARIATION CONTINUE (CVT)

(30) Priority: 05.04.2022 IT 202200006695
(43) Date of publication of application: 12.02.2025
(73) Proprietor: Dayco Europe S.R.L., 66100 Chieti (IT)
(72) Inventor: DI MECO, Marco, 66100 CHIETI (IT); BUCCELLA, Floriano, 66100 CHIETI (IT); DI MARCO, Marta, 66100 CHIETI (IT); NARDONE, Fabio, 66100 CHIETI (IT)
(74) Representative: Studio Torta S.p.A.
(86) International application number: PCT/IB2023/053384
(87) International publication number: WO 2023/194886

(56) References cited:
- CA-A1- 3 053 901
- US-A1- 2016 040 749

## Description

### CROSS-REFERENCE TO RELATED APPLICATIONS

This Patent Application claims priority from Italian Patent Application No. 102022000006695 filed on April 5, 2022.

### TECHNICAL FIELD

This invention relates to a continuously variable transmission belt or CVT belt.

### PRIOR ART

Belts for continuously variable transmission or variable speed drive are belts used in a closed loop controlled system having a feedback mechanism for automatic and relatively rapid shifting.

Often, in continuously variable transmissions, the driver sheave reacts to a speed measurement or speed change in order to keep the power source within an optimum power or speed range, and the driven sheave reacts to the torque load. Belt-driven CVTs are widely used in scooters, all-terrain vehicles, snowmobiles, and even automobiles.

As two pulley halves move axially apart or together to force a change in belt radial position, the belt may be subjected to extreme friction forces as the belt changes radial position within the sheaves. As two sheave halves move together axially to increase the pitch line of the belt, the belt is subjected to extreme friction forces and to high axial or transverse compressive forces. High and variable torque loads result in high-tension forces and high wedging forces, which also result in high transverse compressive forces on the belt.

All these forces are severe in a CVT because of the dynamics of the applications (e.g. frequent, rapid shifts, with high acceleration loads). As the CVT belt traverses the driver and driven pulleys, it is subjected to continual bending or flexing.

Rubber CVT belts are used without lubrication in so-called "dry CVT" applications.

CVT belt must be designed to have good longitudinal flexibility, high longitudinal modulus, high abrasion resistance, and high transverse stiffness. The belt must operate across a wide temperature range, for a long time. Power transmission belts generally comprise a body made of an elastomeric material, in which a plurality of longitudinal thread-like durable inserts, also known as cords or "cords" are embedded.

Each component of the power transmission belt contributes to increase the performance in terms of mechanical resistance, in order to decrease the risk of failure of the power transmission belt, e.g. breaking, and to increase the specific transmissible power.

In particular, the cords contribute to ensuring the required mechanical characteristics of the power transmission belt and make an essential contribution to determining the modulus of the power transmission belt and, in particular, ensure stable performance over time. The cords are generally obtained by winding high-modulus fibres several times.

As CVT belt are subjected to high loads, cords are usually made in high modulus fibres.

The cords are normally treated with suitable material to increase the compatibility of the fibres with the body compound that surrounds the cords. The body compound enables connecting the various abovementioned elements and ensures that they contribute to the final performance of the power transmission belt in a synergetic manner.

It is known from EP2480802 to make a CVT belt having an overcord layer, an undercord layer and an adhesion layer around the cords interposed between the undercord layer and the overcord layer.

The different layer have usually different compositions and are made of vulcanized rubber containing various additives. The overcord and the undercord layer usually comprise fibres, whilst the adhesion layer generally does not comprise fibres. Other reinforcing layers may be incorporated into the belt. Both the underside and the over side are preferably cogged or toothed and may be covered by fabric and/or further coating layers. The covering fabric has the task of increasing abrasion resistance and thus protects the working surface of the power transmission belt.

Finally, the body compound allows connecting the various above said elements and ensuring that the various elements forming the power transmission belt itself synergically contribute to the final performance of the CVT belt.

In recent engines where performance has increased significantly, CVT belts are subjected to even higher temperatures and these temperatures result in quicker deterioration of the materials forming the various components and the CVT belts must have even better mechanical characteristics in order to have a longer mean lifetime.

In particular, new applications are more demanding in term of compressibility also known as transversal stiffness of the belt in response to the solicitation during the use of the belt.

If the belt is less compressible, it flexes less and has a lower wear.

Various approaches have been used to change the compressibility of the belt, without resulting in significant improvements.

US2016040749 relates to a power transmission belt provided with a tension member, a tension member-supporting layer, a tension rubber layer, and a compression rubber layer, the belt having a plurality of cog portions, in which the tension member is formed of an aramid fiber, the compression rubber layer is formed of a vulcanized rubber composition containing a rubber component and aramid short fibers embedded in the vulcanized rubber composition with being arranged in a width direction of the belt, the power transmission belt has a strain of from 0.5 to 0.8% when compressed under a stress of 2.0 N/mm2 in the width direction, and the power transmission belt has a strain of from 0.35 to 0.7% when pulled under a load of 2 kN in the lengthwise direction.

### DISCLOSURE OF INVENTION

A first object of the present invention is to obtain a CVT belt, in particular a single or double cogged belt, with superior mechanical characteristics, which is resistant to high temperatures and therefore has a longer service life. In accordance with the present invention, this object is achieved by a CVT belt according to claim 1.

### BRIEF DESCRIPTION OF DRAWINGS

For a better understanding of the present invention, it will now be described with reference to the attached figures, in which:
- Figure 1 is a schematic lateral view of a CVT belt according to the present invention with a portion extracted to see the embedded cords;
- Figure 2 is a schematic section taken along the A or H axis of the CVT belt of Fig. 1;
- Figure 3 is a graph reporting the results from duration tests of the example of the inventive belt of comparative belts;
- Figure 4 is a schematic view of a transmission system comprising CVT belts for testing the durability as disclosed in the examples;
- Figure 5 is a scheme of a test device to measure the compressibility or stiffness of belts;
- Figure 6 is a scheme of the test machine for the stiffness test with two samples inserted; and
- Figure 7 is a graph of compressibility/stiffness executed on the belt of the invention and on a comparative belt.

### DESCRIPTION

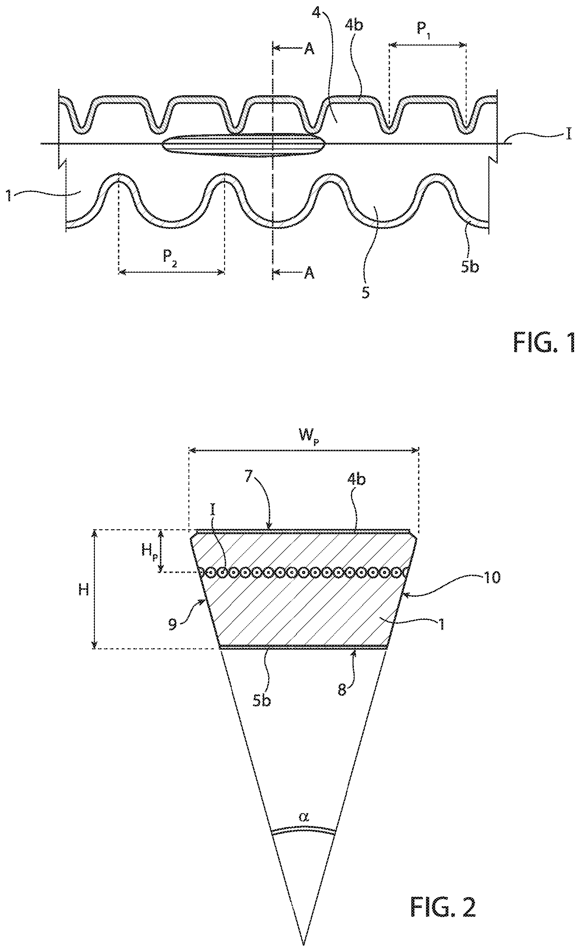

Figure 1 shows a CVT belt, indicated as a whole by reference numeral 1. The CVT belt 1 comprises a body 2 made of elastomeric material in which a plurality of longitudinal filiform resistant inserts 3 also known as cords are embedded. In a first embodiment, the body 2 has a first or top toothing 4 on a first or top side, optionally covered by a first or top covering fabric 4b and a second or bottom toothing 5 on a second or bottom side, optionally covered by a second of bottom covering fabric 5b.

In an alternative embodiment, the belt has only a top toothing and the bottom surface has no toothing and is therefore flat.

Hereinafter, by the expression "the elastomeric material is basically constituted" it is meant that the elastomeric material can comprise small percentages of other polymers or copolymers, which can be added to the elastomeric material without varying the chemical-physical characteristics of the mixture and hence without departing from the scope of the present invention.

Hereinafter, it is understood that "additive for elastomeric material" means some kind of material that is added to the elastomeric material to change its chemical and physical characteristics.

The CVT belt comprises a body in a single layer.

By a single layer it is meant that it has the same composition throughout the extension of the belt from the top to the bottom and therefore it does not differentiate among adhesion layer, undercord layer or overcord layer as the layers are not distinct and cannot be separated from one another. Preferably, the body is made of a compound comprising one elastomeric material as the main elastomer, optionally in combination with further elastomeric materials and additives.

The "main elastomer" is intended as being present in the compound that constitutes the body for more than 50% by weight, calculated on the total weight of all the elastomers in the body and therefore excluding all other non-elastomeric components of the power transmission belt like cords or fabrics.

The body is formed entirely of a single rubber composition forming therefore a single layer and comprising an HNBR elastomer, i.e. a nitrile group-containing copolymer rubber comprising an acrylonitrile unit (a), a monomer unit (b) of α,β-ethylenically unsaturated nitrile monomer other than acrylonitrile, and a conjugated diene monomer unit (c). Therefore there is no distinction between the rubber composition close to the top side or the bottom side and the rubber composition surrounding the cords 3.

More preferably, the HNBR has an iodine value of 120 or less, even more preferably of 80 or less.

Preferably the content of the total of the acrylonitrile unit (a) and the monomer unit (b) of α,β-ethylenically unsaturated nitrile monomer other than acrylonitrile is 1 to 50% by weight in the total monomer unit, and the content ratio of the acrylonitrile unit (a) and the monomer unit (b) of α,β-ethylenically unsaturated nitrile monomer other than acrylonitrile is 10:90 to 90:10 in a weight ratio of "content of acrylonitrile unit (a) : content of monomer unit (b) of α,β-ethylenically unsaturated nitrile monomer other than acrylonitrile.

In the nitrile group-containing copolymer rubber of the present invention, it is preferable that the content of the total of the acrylonitrile unit (a) and the monomer unit (b) of α,β-ethylenically unsaturated nitrile monomer other than acrylonitrile is 10 to 45% by weight in the total monomer unit.

In the nitrile group-containing copolymer rubber of the present invention, it is preferable that the content ratio of the acrylonitrile unit (a) and the monomer unit (b) of α,β-ethylenically unsaturated nitrile monomer other than acrylonitrile is 20:80 to 80:20 in a weight ratio of "content of acrylonitrile unit (a): content of monomer unit (b) of α,β-ethylenically unsaturated nitrile monomer other than acrylonitrile".

In the nitrile group-containing copolymer rubber of the present invention, it is preferable that the content ratio of the acrylonitrile unit (a) and the monomer unit (b) of α,β-ethylenically unsaturated nitrile monomer other than acrylonitrile is 25:75 to 75:25 in a weight ratio of "content of acrylonitrile unit (a) : content of monomer unit (b) of α,β-ethylenically unsaturated nitrile monomer other than acrylonitrile".

In the nitrile group-containing copolymer rubber, it is preferable that a content of the conjugated diene monomer unit (c) is 10 to 90% by weight.

Preferably, the above rubber composition comprises the nitrile group-containing copolymer rubber blended with a cross-linking agent and in the belt, the rubber composition is cross-linked.

The term "nitrile-group containing copolymer rubber" in the context of this invention concerns a copolymer containing at least acrylonitrile units, α,β-ethylenically unsaturated nitrile monomer units other than acrylonitrile, conjugated diene monomer units of at least one kind.

The term copolymer encompasses polymers having more than one monomer unit. In one embodiment of the invention, the copolymer is preferably, for example, from the three monomer types (a), (b) and (c) described above, and is therefore a terpolymer. The term "copolymer" likewise encompasses, for example, additionally quaterpolymers, derived from the three monomer types (a), (b) and (c) described and a further monomer unit (d).

The α,β-ethylenically unsaturated nitrile used, which forms the α,β-ethylenically unsaturated nitrile units (a), may be any known α,β-ethylenically unsaturated nitrile. Preference is given to α,β-ethylenically unsaturated nitrile monomer having 2 to 5 carbon atoms as the carbon atom excluding the cyano group is preferable also indicated as (C2-C5)-α,β-ethylenically unsaturated nitriles such as α-haloacrylnitrile, for example α-chloroacrylnitrile and α-bromoacrylnitrile, α-alkylacrylonitrile, for example methacrylonitrile, ethacrylonitrile or mixtures of two or more α,β-ethylenically unsaturated nitriles. Particular preference is given to methacrylonitrile, ethacrylonitrile or mixtures thereof. Very particular preference is given to methacrylonitrile.

The amount of components a) acrylonitrile and b) α,β-ethylenically unsaturated nitrile units is typically in the range from 1 to 50%, based on the total amount of 100% by weight of all the monomer units, preferably 10 to 45 wt%, more preferably 15 to 42 wt%, still more preferably 20 to 40 wt%, particularly preferably 26 to 36 wt%.

In certain embodiment in addition to the acrylonitrile unit (a), the monomer unit (b) of α,β-ethylenically unsaturated nitrile monomer other than acrylonitrile, and the conjugated diene monomer unit (c), it is preferable that the nitrile group-containing copolymer rubber according to the present invention further contains a carboxyl group-containing monomer unit (d). By further containing the carboxyl group-containing monomer unit (d), a carboxyl group can be introduced into the nitrile group-containing copolymer rubber of the present invention.

The carboxyl group-containing monomer constituting the carboxyl group-containing monomer unit (d) is not particularly limited so long as the monomer having one or more unsubstituted (free) carboxyl groups which are not esterified etc. Examples thereof include α,β-ethylenically unsaturated monocarboxylic acid monomer, α,β-ethylenically unsaturated polyvalent carboxylic acid monomer, and α,β-ethylenically unsaturated dicarboxylic acid monoester monomer, and the like. The carboxyl group-containing monomer also includes one having carboxyl group that form carboxylate. In addition, an anhydride of the α,β-ethylenically unsaturated polyvalent carboxylic acid can be used as the carboxyl group-containing monomer since their acid anhydride group is cleaved to form carboxyl groups after copolymerization.

Further, in addition to the acrylonitrile unit (a), the monomer unit (b) of α,β-ethylenically unsaturated nitrile monomer other than acrylonitrile, and the conjugated diene monomer unit (c), and the carboxyl group-containing monomer unit (d) which is contained accordance with need, the nitrile group-containing copolymer rubber according to the present invention may contain an α,β-ethylenically unsaturated monocarboxylic acid ester monomer (e).

The α,β-ethylenically unsaturated monocarboxylic acid ester monomer constituting the α,β-ethylenically unsaturated monocarboxylic acid ester monomer (e) is not particularly limited. Examples thereof include α,β-ethylenically unsaturated monocarboxylic acid alkyl ester monomers, α,β-ethylenically unsaturated monocarboxylic acid alkoxyalkyl ester monomers, α,β-ethylenically unsaturated monocarboxylic acid aminoalkyl ester monomers, α,β-ethylenically unsaturated monocarboxylic acid hydroxyalkyl ester monomers, and α,β-ethylenically unsaturated monocarboxylic acid fluoroalkyl ester monomers and the like.

The rubber composition of the present invention contains the above-mentioned nitrile group-containing copolymer rubber of the present invention and a cross-linking agent.

The cross-linking agent is not particularly limited, but, for example, a sulfur-based cross-linking agent, an organic peroxide cross-linking agent, a polyamine-based cross-linking agent, etc. may be used.

The content of the cross-linking agent in the rubber composition of the present invention is not particularly limited, but is preferably 0.1 to 20 parts by weight, more preferably 0.2 to 15 parts by weight, and still more preferably 0.5 to 10 parts by weight, with respect to 100 parts by weight of the nitrile group-containing copolymer rubber. By setting the content of the cross-linking agent within the above-mentioned range, it is possible to make the mechanical properties of the obtained cross-linked rubber better.

Further, the body preferably contains a filler to enhance the mechanical properties of the obtained cross-linked rubber. The filler is any filler usually used in the field of rubber, and any of an organic filler and an inorganic filler can be used, but from the viewpoint of highly effective compounding, the inorganic filler is preferable. The inorganic filler may be any inorganic filler usually used for compounding in rubber, and, for example, carbon black, silica, clay, alumina, aluminium hydroxide, magnesium oxide, magnesium hydroxide, calcium oxide, calcium hydroxide, magnesium aluminium oxide, titanium oxide, kaolin, pyrophyllite, bentonite, talc, attapulgite, calcium magnesium silicate, aluminum silicate, magnesium silicate, calcium silicate, crystalline aluminosilicate, etc. Among these, carbon black, silica, and clay are preferably used, silica and clay are more preferable. The inorganic fillers can be used as single types alone or as a plurality of types combined.

Carbon black may be any carbon black usually used for compounding in rubber, and, for example, furnace black, acetylene black, thermal black, channel black, graphite, etc.

As silica, it is not particularly limited, but natural silica such as quartz powder and silica stone powder; synthetic silica such as silicic anhydride (such as silica gel and aerosol) and hydrous silicic acid; etc., and among these, synthetic silica is preferable.

Clay is not particularly limited so long as the clay is a natural mineral comprising hydrous aluminium silicate as the main component, but montmorillonite, pyrophyllite, kaolinite, halloysite, sericite, etc. may be mentioned.

As the inorganic filler, the inorganic filler obtained by performing coupling treatment thereon with a silane coupling agent, aluminum coupling agent, titanium coupling agent and the like, or performing surface-modifying treatment thereon with a higher fatty acid or a metal salt thereof, a derivative of the higher fatty acid such as an ester and an amide thereof, a surfactant, and the like may be used. At this time, as the inorganic filler, one that has been subjected to surface-modifying treatment in advance may be used, or when preparing the rubber composition, the surface-modifying treatment of the inorganic filler may be performed by blending a surface modifier such as a coupling treatment agent may be used together with the inorganic filler.

Further, the rubber composition may include, in addition to the above components, compounding agents usually used in the field of rubber such as a metal oxide such as zinc oxide or magnesium oxide, an α,β-ethylenically unsaturated carboxylic acid metal salt such as zinc methacrylate or zinc acrylate, a plasticizer, a co-cross-linking agent, a cross-linking aid, a cross-linking retarder, an antiaging agent, an antioxidant, a light stabilizer, a scorch retarder such as a primary amine, an activating agent such as diethylene glycol, a processing aid, a slip agent, an adhesive, a lubricant, a flame retardant, an antifungal agent, an acid acceptor, an antistatic agent, a pigment, and a foaming agent. The amounts of these compounding agents are not particularly limited and the compounding agents can be compounded in the amounts according to the compounding purposes so long as the compounding amounts are within ranges not impairing the object and the effects of the present invention.

Furthermore, the rubber composition of the present invention may contain rubber other than the above-mentioned nitrile group-containing copolymer rubber in a range where the effects of the present invention are not obstructed. Such rubber other than the nitrile group-containing copolymer rubber of the present invention includes acrylic rubber, ethylene-acrylic acid copolymer rubber, fluororubber, styrene-butadiene copolymer rubber, polybutadiene rubber, ethylene-propylene copolymer rubber, ethylene-propylene-diene ternary copolymer rubber, epichlorohydrin rubber, urethane rubber, chloroprene rubber, silicone rubber, fluorosilicone rubber, chlorosulfonated polyethylene rubber, natural rubber, and polyisoprene rubber, and the like. When mixing in rubber other than the nitrile group-containing copolymer rubber of the present invention, the amount is preferably 30 parts by weight or less, more preferably 20 parts by weight or less, still more preferably 10 parts by weight or less, with respect to 100 parts by weight of the nitrile group-containing copolymer rubber of the present invention.

The rubber composition of the present invention is prepared by mixing the above ingredients preferably in a nonaqueous system. The method of preparation of the rubber composition of the present invention are not particularly limited, but usually it can be prepared by kneading the ingredients other than the cross-linking agent and ingredients unstable against heat (co-cross-linking agents and the like) by a mixing machine such as a Banbury mixer, internal mixer, or kneader for primary kneading, then transferring the mixture to open rolls and the like and adding the cross-linking agent and ingredients unstable against heat and the like for secondary kneading.

Advantageously, the filler, is added in quantities in the range between 0 and 80 phr, more advantageously about 40 phr. Advantageously, light-coloured reinforcing fillers such as talc, calcium carbonate, silica and silicates are added in quantities advantageously in the range between 0 and 80 phr, advantageously about 40 phr. It is also possible to advantageously use silanes in quantities in the range between 0 and 5 phr.

Advantageously, zinc and magnesium oxides are added in a quantity ranging between 0 and 15 phr.

Advantageously, ester plasticizers such as trimellitates or ethyl esters or ethylene glycol ether esters (e.g. ADK sizer 700 or ADK sizer 735) are added in a quantity advantageously ranging between 0 and 20 phr.

Advantageously, pre-vulcanization coagents such as triallyl cyanurates and organic or inorganic methacrylates such as metal salts are advantageously added in a quantity ranging between 0 and 20 phr, or organic peroxides, such as isopropyl benzene peroxide for example, in a quantity advantageously ranging between 0 and 15 phr.

Advantageously, the mixture in the elastomeric material moreover comprises reinforcement fibres, more advantageously in an amount comprised between 1 and 20 %wt, preferably between 5 and 15 %, alternatively between 2 and 40 phr, preferably between 5 and 30 phr, even more advantageously 20 phr. Advantageously, the reinforcement fibres have a length comprised between 0.1 and 10 mm, more preferably between 1 and 6 mm.

The use of fibres enables a further increase in the mechanical characteristics of the mixture constituting the body.

Fibers are therefore present throughout the body including the region surrounding the cords and this allows to ensure a higher stiffness.

Preferably, the fibres are chopped fibres.

Advantageously, the reinforcement fibres comprise aromatic polyamides, more advantageously aramides, for example Technora^{©} fibres can be advantageously used, which can be adhered to the mixture by means of an RFL-based treatment. For example, the lattice used can have a base of VP-SBR, i.e., a copolymer of vinylpiridine and styrenebutadiene. Particularly effective have proven aramidic fibres, such as, for example, Technora^{®} fibres of Teijn having a length of 3 mm.

The cords 3 are preferably constituted by the coils of a continuous filiform resistant element or "cord", wound in a helix.

The cords 3 preferably comprise carbon fibre or PBO. Alternatively, the cords can also be of the so-called "hybrid" type, i.e., made of at least one first material and one second material.

The use of cords 3 made of two materials in the form of different fibres or filaments enables a better adhesion of the resistant insert 3 itself to the mix constituting the body of the CVT belt 1.

The cords 3 are preferably treated with an aqueous based treatment known as reactive impregnation, but can also be treated similar treatment or with RFL, i.e. composition with a base of latex, resorcinol and formaldehyde.

In the case where the cords 3 comprise two fibre materials, both the first material and the second material are preferably chosen in the group constituted by glass fibres, aramidic fibres, polyester fibres, carbon fibres, PBO fibres, polyamide fibres, polyketone (POK) fibres, PEEK fibres, poly-vinyl-acetate (PVA) fibres, liquid-crystal-polymer (LPC) fibres, and PEN fibres.

The first material preferably has a modulus lower than the second material and is preferably wound around the second material.

Preferably, in cross section the second material occupies a surface comprised between 15 and 75% with respect to the overall surface of the cross section itself. Still more preferably, the second material occupies a surface comprised between 45 and 55% with respect to the overall surface. Even more advantageously in cross section the fibres of the two materials occupy similar surfaces so as to balance as much as possible the positive characteristics of both to obtain the best performance on the belt.

The first material is preferably glass fibre, and the second material is preferably carbon fibre.

Preferably, the fibres of the first material are wound around the fibres of the second material to coat externally the fibres of the first material at least partially, even more preferably to coat the fibres of the second material entirely.

Preferably, the cords 3 according to the present invention present a twisting of the Lang's Twist type, i.e., with two twists in the same direction, in so far as said embodiment has proven particularly effective.

The number of filaments that form a resistant insert, as likewise the number of basic filaments or the titre or the entire embodiment of the insert, may be varied without departing from the present invention.

In order to obtain the best performancde, the number of yarns formed by the fibres of the first material is preferably between 3 and 18, preferably between 8 and 15.

The number of yarns formed by the fibres of the second material is preferably between 1 and 5, more preferably between 1 and 3, even more preferably 1.

The first material is preferably a low module fibre, more preferably is a fibre chosen in the group constituted by glass, aramide, PA, PET.

The second material is preferably a high modulus fibre, more preferably a fibre chosen in the group constituted by carbon and PBO, even more preferably carbon.

A purely indicative example of a resistant insert 3 comprises 12 yarns of glass surrounding entirely 1 yarn of carbon.

In order to form the resistant insert 3 the glass filaments are preferably treated with an aqueous based treatment known as reactive impregnation, but also other treatments may be used as RFL based treatments.

The filaments are then twisted a first time to form a yarn. Then, the yarns are wound around one yarn of carbon fibre. In this way, the yarns form an insert, preferably of a size between 0.7 and 1.4 mm, in particular 1.15 mm.

An example of such configuration is known with the acronym 22 tex 3 * 12, 400 Tex * 1.

The first twisting operation to which the filaments are subjected to form the twists consists of a number of twists in a first direction S (clockwise direction).

The second twisting operation to which the twists are subjected when they are wound around the carbon fibre again consists twists and is performed in the same direction S so as to form cords referred to as S.

These cords consequently present a twisting of the Lang's twist type i.e., they have two twists in the same direction. The twists that the filaments of carbon fibre undergo to form a twist are in the same first direction S.

Using the same method and the same procedure, cords 3 are twisted both times in a direction opposite to the first direction, i.e., in a direction referred to as Z (counter clockwise direction) to form cords Z.

In order to form a belt according to the present invention, the cords S and Z are preferably simultaneously deposited on the mould with a spiralling pitch comprised, for example, between 1.5 and 5 mm, advantageously between 2.0 and 3.5 mm, more advantageously between 2.1 and 2.6 mm, for example 2.56 mm, where by this measurement is to be understood the distance between the central point of two cords with the same twisting.

The cords 3 have a central axis I along their length as drawn in Fig. 1 and Fig. 2.

The toothing 4 is preferably covered with a first covering fabric and the second toothing 5 is preferably covered with a second covering fabric preferably made of one or more layers and can be obtained using different weaving techniques, for example, the weaving technique known as 2x2 twill.

The first covering fabric of the first or top toothing preferably comprises aliphatic or aromatic polyamide, more preferably aliphatic polyamide, even more preferably is made by yarns of polyamide, as an example polyamide 6 or polyamide 66.

Preferably, the secondo covering fabric of the second toothing 5, if present, has a composite structure constituted by a weft and a warp, in which the weft is constituted by threads formed by an elastic thread as core and by one, two or more composite threads wound on said elastic thread. Each composite thread comprises preferably a thread with high thermal and mechanical resistance and at least one coating thread wound on the thread with high thermal and mechanical resistance. Preferably, each composite thread comprises a thread with high thermal and mechanical resistance and a pair of coating threads wound on the thread with high thermal and mechanical resistance. The elastic thread is preferably made of polyurethane. The thread with high thermal and mechanical resistance is preferably made of para-aromatic polyamide.

As shown in Figure 1 and 2 the belt has an axis A orthogonal to said central axis I and extending at a point where the thickness of the belt is the highest.

The cross-section defined by a section plane orthogonal to said central axis I and taken at the axis A has a trapezoidal shape as in drawn in Fig. 2. The highest thickness (or height) H of the belt is defined as the distance between the top side and the bottom side. In other terms, the Axis A is taken in the point where the distance between the top side and the bottom side is the highest as shown in Figs. 1 and 2.

The belt has a top side defining a top width 7 and a bottom side 8 defining a bottom width and two lateral sides 9, 10. The top side 7 corresponds to the wider base of the trapezoid. The bottom side 8 corresponds to the smaller base of the trapezoid; therefore, the top width 7 is bigger than the bottom width 8.

The two lateral sides 9 and 10 define an angle alfa with the top side as disclosed in Fig. 1.

The angle alfa is preferably comprised between 24 and 30°, preferably between 26 and 28°.

The edges indicated with 12 in Fig. 2 and defined by the intersection of the top side and the lateral sides are bevelled or chamfered or filleted or radiused.

This improved geometry of the edges allows to reduce the friction on the pulleys and therefore to obtain less wear and an improvement in the duration of the belt.

Moreover, the belt has a better compressibility or transversal stiffness in comparison to the known ones and is capable of resisting to external solicitation without any variation for a longer span of time.

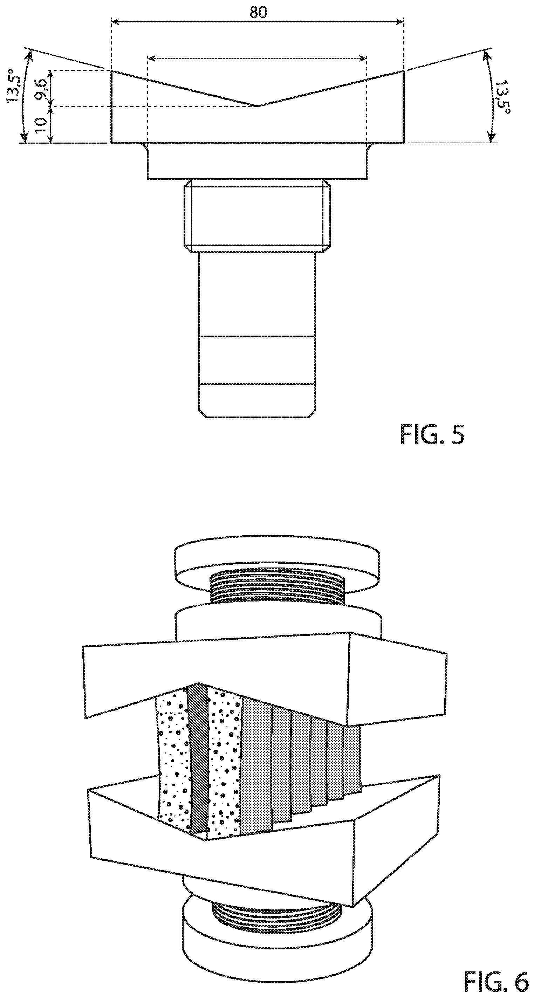

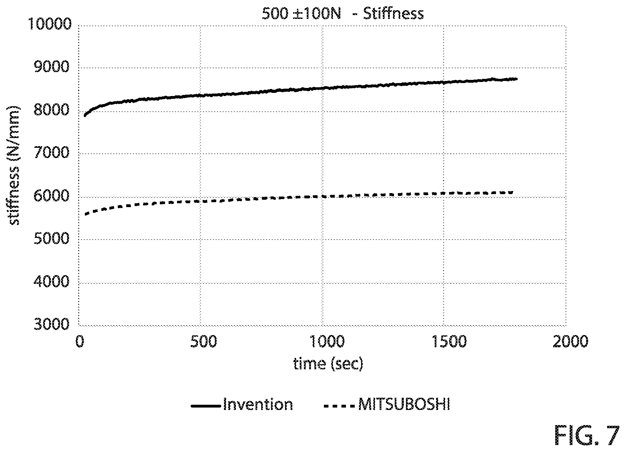

Preferably the transversal stiffness as measured with the text machine of Fig. 5 at the condition of the Examples reported below is preferably above 7000 N/mm, even more preferably more than 8000 N/mm after at least 200 sec of test as drawn in Fig. 7.

The thickness of the belt or Height H defined as distance between the top side and the bottom side is preferably between 4 and 25 mm, more preferably between 8 and 20 mm, as an example 16,6 mm.

The distance Hp between said top side and the central axis I of the cords is preferably between 1 and 12 mm, more preferably between 1 and 9 mm, as an example 6 mm.

The ration between the thickness or height of the belt H and the Hp is comprised preferably between 0.1 and 0.6, more preferably between 0.1 and 0.4.

A projected top width WP is defined as the distance between the two intersections of the extensions of the top side and the lateral sides the projected top width is comprised between 10 and 50 mm, even more preferably between 15 and 45 mm.

The bottom width is preferably comprised between 12 and 42 mm. More preferably, the bottom width is comprised between 20 and 40 mm .

The CVT belt may have different lengths, but preferably has a length between 300 and 1500 mm, more preferably between 900 and 1300 mm, as an example 1100 mm.

From an examination of the characteristics of the CVT belt made according to the present invention, the advantages that can be achieved with it are evident.

It has been experimentally verified that the CVT belt according to the present invention ensures a significant improvement in high temperature resistance whilst maintaining excellent mechanical characteristics, in particular a high transversal stiffness.

While some embodiments have been disclosed by way of illustration of the invention, it is apparent that the skilled in the art may make modifications to the kind of fibres and to the materials forming it, as well as to the materials of the body compound and of the other components of the power transmission belt without departing from the scope of the present invention.

In what follows, unless otherwise specified, "parts" are parts by weight. The methods of testing or evaluating the physical properties and the characteristics are as follows.

### Example 1 and Comparative Examples 2-3

A CVT belt according to the invention and as drawn in Fig. 1 is made as follows:
The body comprises an HNBR compound loaded with 10 % aramidic fibres with a length of 3 mm.

The cords are hybrid cords made of glass yarns surrounding a single carbon yarn with the above described configuration 22 tex 3 * 12, 400 Tex * 1.

The cord are treated with an aqueous solution.

The top fabric covering the top toothing is made of nylon 66 yarns.

The bottom fabric of the bottom toothing is made of complex yarns where the weft is constituted by threads formed by an elastic thread of PU as a core and by two or more composite threads wound on the elastic thread formed by PA and nylon 66.

The belt effective length is 1109.3, the angle alfa is 26, the total thickness of height H is 16.6 mm. The distance Hp between the central point of the cords and the top side is 6 mm.

The ratio between H/Hp is therefore 0,3614.

The projected top width is 38.6 mm, the bottom width is 32 mm.

The top toothing has a pitch of 9.4 mm and the bottom pitch is 11.2 mm. The body is made of a single composition from the top to the bottom.

The edges between the top side 7 and the lateral sides 9, 10 are bevelled.

The belt according to the invention is compared with belts 2 and 3.

The belt 2 is sold on the marked with the part number BANDO PN: WBB1202 and the belt 3 with the part number MITSUBOSHI PN: 280 652. The part number identify geometry and materials of the belts.

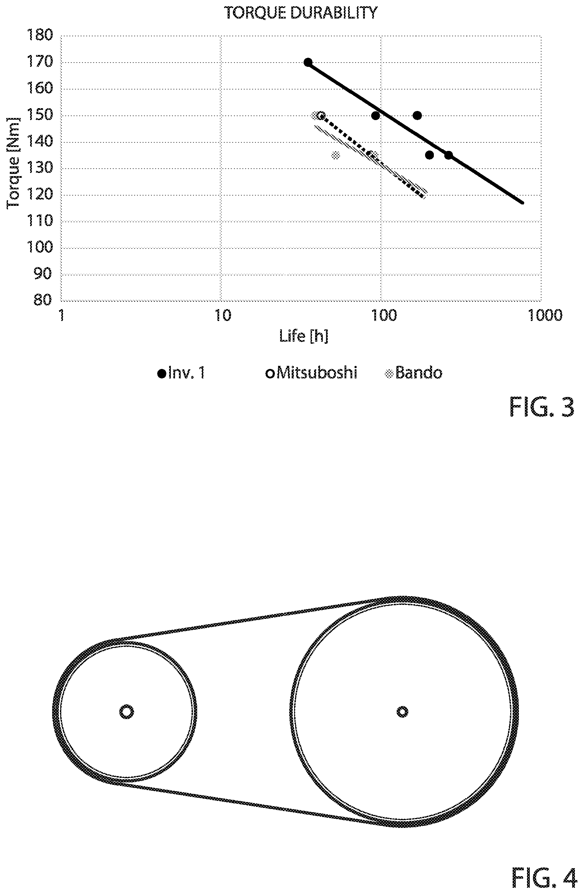

The durability of the 3 belts have been tested on a test bench with the system drawn in Fig. 4. Such system reproduces an all terrain vehicle known as CAN-AM Maverick turbo.

The conditions of the test are disclosed in Table 1

**Table 1**

| Parameter | Measure |
|---|---|
| Center distance | 255,8 mm |
| Driving pulley speed | 5000 rpm constant |
| Driven pulley torque | 100, 135, 150, 170 Nm constant |
| Box temperature | Not conditioned |
| Room temperature | 24°C |
| Barke shaft train | 0.55 Kg/m2 |
| Added flywheel | 1,2 kg/m2 |

The test stops at belt breakage, or when the belt on top surface has a temperature above 90°C.

As it can be seen from the graphic of Fig. 3 the line of the CVT belt of the invention is above the lines of the comparative belts and therefore shows an improved torque durability over a longer span of hours.

### Example 4 and comparative example 5

A compressibility test, also known as stiffness test is executed on the test machine drawn in Fig. 5.

As pictured in the scheme of Fig. 6 two belts are placed back to back and contemporarily measured to have parallel results. The test is executed on a MTS 810 servohydraulic testing system by applying a mean load of 500 N and a Dynamic load of ± 100 N with a Frequency of 10 Hz.

The results over time are collected and shown in the Graph of Fig. 7 comparing the results obtained with the belt of the invention with the results obtained with the above used belt of Mitsuboshi of example 3.

The angle of 13.5° of Fig 5 may vary if the angle alfa of the belt changes, as the test machine has to follow stricitly the profile of the belt. The length of the belt sample is 80 mm and the length of the surface of test machine where the sample is di 60 mm.

As it can be seen from the test results, the stiffness measured on the belt of the present invention is constantly better than the comparison belt and this is expected to result in a lower wear and therefore a longer duration.

In particular, the stiffness is always more than 7000 N/mm over a long span of time.

## Claims

1. CVT belt (1) having a body (2) extending over the entire section of the belt and comprising cords (3) comprising carbon or PBO fibres and having a central Axis I along their length, said body is made from a single compound comprising a nitrile group-containing copolymer rubber as main elastomer, said nitrile group-containing copolymer rubber comprising an acrylonitrile unit (a), a monomer unit (b) of α,β-ethylenically unsaturated nitrile monomer other than acrylonitrile, and a conjugated diene monomer unit (c) and having an iodine value of 120 or less, and said belt having
∘ a top toothing (4)
∘ an axis A orthogonal to said central axis and extending at a point where the thickness of the belt is the highest
∘ a cross-section defined by a section plane orthogonal to said central axis I and taken at the axis A, the crosssection having a trapezoidal shape and a top side (7) defining a top width, a bottom side (8) defining a bottom width and two lateral sides (9,10),
∘ said top width being bigger than said bottom width, o the two lateral sides forming an angle alfa with said top side,
∘ a projected top width Wp being defined as the distance between the two intersections of the extensions of the top side and the lateral sides,
**characterized in that**
- the edges defined by the intersection of the top side and the lateral sides are bevelled or chamfered or filleted or radiused
- the distance Hp between said top side and the central axis I of said cords is comprised between 1 and 6 mm,
- the ratio between the height of the belt H defined as distance between the top side and the bottom side and said Hp is comprised between 0.1 and 0.6.

2. CVT belt (1) according to claim 1, **characterized in that** the said ratio between the thickness and the Hp is between 0.1 and 0.4.

3. CVT belt (1) according to claims 1 or 2, **characterized in that** it comprises a top toothing (4) on the top side and a bottom toothing (5) on the bottom side.

4. CVT belt (1) according to any of the previous claims, **characterized in that** said top toothing (4) and said bottom toothing (5) have different pitches.

5. CVT belt (1) according to any of the previous claims, **characterized in that** said top toothing (4) has a pitch between 5 and 15 mm.

6. CVT belt (1) according to any of claims 3 to 5, **characterized in that** said bottom toothing (5) has a pitch between 5 and 12 mm.

7. CVT belt (1) according to any of the previous claims, **characterized in that** said projected top width Wp is comprised between 15 and 45 mm.

8. CVT belt (1) according to any of the previous claims, **characterized in that** said bottom width is comprised between 12 and 42 mm.

9. CVT belt (1) according to any of the previous claims, **characterized in that** said angle alfa is comprised between 24° and 30°.

10. CVT belt (1) according to any of the previous claims, **characterized in that** said top toothing (4) and said bottom toothing (5) are covered by a fabric.

11. CVT belt (1) according to any of the preceding claims, **characterized in that** said body (2) comprises fibres uniformly distributed in the body from the top side to the bottom side.

12. CVT belt (1) according to claim 11, **characterized in that** said fibres are present in percentage by weight of the total weight of the body of 1 to 20 % wt.

13. CVT belt (1) according to any of the preceding claims, **characterized in that** said fibres are chopped fibres.

14. CVT belt (1) according to any of the preceding claims, **characterized in that** said fibres are made of aliphatic or aromatic polyamide.

15. CVT belt according to any of the preceding claims, **characterized in that** the stiffness is above 7000 N/mm when measured with a load of 500 N, applying a dynamic load of ± 100 N with a Frequency of 10 Hz when using a test machine.

## Patentansprüche

1. CVT-Riemen (1) mit einem Körper (2), der sich über den gesamten Abschnitt des Riemens erstreckt und Schnüre (3) umfasst, die Kohlenstoff- oder PBO-Fasern umfassen und eine zentrale Achse I entlang ihrer Länge aufweisen, wobei der Körper aus einer einzigen Verbindung hergestellt ist, die einen nitrilgruppenhaltigen Copolymerkautschuk als Hauptelastomer umfasst, wobei der nitrilgruppenhaltige Copolymerkautschuk eine Acrylnitrileinheit (a), eine Monomereinheit (b), die aus einem alpha, beta-ethylenisch ungesättigten Nitrilmonomer anders als Acrylnitril, und einer konjugierten Dienmonomereinheit (c) besteht und eine Jodzahl von 120 oder weniger aufweist, wobei der Gurt aufweist;
- eine obere Verzahnung (4)
- eine Achse A, die orthogonal zu der Mittelachse verläuft und sich an einem Punkt erstreckt, an dem die Dicke des Riemens am größten ist
- einen Querschnitt, der durch eine Schnittebene orthogonal zur Mittelachse I und durch die Achse A definiert ist, wobei der Querschnitt trapezförmig ist und eine Oberseite (7) aufweist, die eine obere Breite, eine unteren Seite (8), die eine untere Breite definiert, und zwei seitlichen Seiten (9, 10) definiert,
∘ wobei die obere Breite größer ist als die untere Breite,
∘ wobei die beiden Seitenwände einen Winkel alfa mit der Oberseite bilden,
∘ eine projizierte obere Breite Wp, die als der Abstand zwischen den beiden Schnittpunkten der Verlängerungen der oberen Seite und der seitlichen Seiten definiert ist,
**dadurch gekennzeichnet, dass**
- die Kanten (11, 12), die durch den Schnittpunkt der oberen Seite und der Seitenwände definiert sind, abgeschrägt oder gefast oder abgerundet oder gerundet sind,
der Abstand Hp zwischen der oberen Seite und der mittleren Achse I der Schnüre zwischen 1 und 6 mm beträgt,
das Verhältnis zwischen der Höhe des Riemens H, definiert als Abstand zwischen der oberen Seite und der unteren Seite, und dem Hp zwischen 0,1 und 0,6 liegt.

2. CVT-Riemen (1) nach Anspruch 1, **dadurch gekennzeichnet, dass** das genannte Verhältnis zwischen der Dicke und dem Hp zwischen 0,1 und 0,4 liegt.

3. CVT-Riemen (1) nach Anspruch 1 oder 2, **dadurch gekennzeichnet, dass** er eine obere Verzahnung (4) auf der oberen Seite aufweist und eine untere Verzahnung (5) auf der unteren Seite.

4. CVT-Riemen (1) nach einem der vorhergehenden Ansprüche, **dadurch gekennzeichnet, dass** die obere Verzahnung (4) und die untere Verzahnung (5) unterschiedliche Teilungen aufweisen.

5. CVT-Riemen (1) nach einem der vorhergehenden Ansprüche, **dadurch gekennzeichnet, dass** die obere Verzahnung (4) eine Teilung zwischen 5 und 15 mm aufweist.

6. CVT-Riemen (1) nach einem der Ansprüche 3 bis 5, **dadurch gekennzeichnet, dass** die untere Verzahnung (5) eine Teilung zwischen 5 und 12 mm aufweist.

7. CVT-Riemen (1) nach einem der vorhergehenden Ansprüche, **dadurch gekennzeichnet, dass** die projizierte obere Breite Wp zwischen 15 und 45 mm liegt.

8. CVT-Riemen (1) nach einem der vorhergehenden Ansprüche, **dadurch gekennzeichnet, dass** die untere Breite zwischen 12 und 42 mm beträgt.

9. CVT-Riemen (1) nach einem der vorhergehenden Ansprüche, **dadurch gekennzeichnet, dass** der Winkel alfa zwischen 24° und 30° liegt.

10. CVT-Riemen (1) nach einem der vorhergehenden Ansprüche, **dadurch gekennzeichnet, dass** die obere Verzahnung (4) und die untere Verzahnung (5) mit einem Gewebe überzogen sind.

11. CVT-Riemen (1) nach einem der vorhergehenden Ansprüche, **dadurch gekennzeichnet, dass** der Körper (2) Fasern umfasst, die gleichmäßig in dem Körper von der Oberseite zur Unterseite verteilt sind.

12. CVT-Riemen (1) nach Anspruch 11, **dadurch gekennzeichnet dass** die Fasern in einem Gewichtsprozentsatz desGesamtgewichts des Körpers von 1 bis 20 Gew.-% vorhanden sind.

13. CVT-Riemen (1) nach einem der vorhergehenden Ansprüche, **dadurch gekennzeichnet, dass** die Fasern gehäckselte Fasern sind.

14. CVT-Riemen (1) nach einem der vorangehenden Ansprüche, **dadurch gekennzeichnet, dass** die Fasern aus aliphatischem oder aromatischem Polyamid hergestellt sind.

15. CVT-Riemen nach einem der vorhergehenden Ansprüche, **dadurch gekennzeichnet, dass** die Steifigkeit über 7000 N/mm liegt, wenn sie mit einer Last von 500 N gemessen wird, wobei eine dynamische Last von 100 N mit einer Frequenz von 10 Hz X, vorliegt wenn eine Testmaschine verwendet wird.

## Revendications

1. Courroie pour CVT (1) présentant un corps (2) s'étendant sur toute la section de la courroie et comprenant des cordes (3) comprenant des fibres de carbone ou de PBO et présentant un axe central I le long de leur longueur, ledit corps étant fabriqué à partir d'un seul composé comprenant un caoutchouc copolymère contenant des groupes nitriles en tant qu'élastomère principal, ledit caoutchouc copolymère contenant des groupes nitriles comprenant un motif d'acrylonitrile (a), un motif monomère (b) de monomère nitrile α, β-éthyléniquement insaturé autre que l'acrylonitrile, et un motif monomère diène conjugué (c), et présentant une valeur d'iode inférieure ou égale à 120, et ladite courroie présentant
∘ une denture supérieure (4)
∘ un axe A perpendiculaire audit axe central et s'étendant jusqu'à un point où l'épaisseur de la courroie est maximale ∘ une section transversale définie par un plan de coupe perpendiculaire audit axe central I et située au niveau de l'axe A, la section transversale présentant une forme trapézoïdale avec une face supérieure (7) définissant une largeur supérieure, une face inférieure (8) définissant une largeur inférieure et deux faces latérales (9, 10),
o ladite largeur supérieure étant plus grande que ladite largeur inférieure,
∘ les deux faces latérales formant un angle alfa avec ladite face supérieure,
o une largeur supérieure projetée Wp étant définie comme la distance entre les deux intersections des prolongements de la face supérieure et des faces latérales, **caractérisée en ce que**
- les bords définis par l'intersection de la face supérieure et des faces latérales sont biseautés ou chanfreinés ou de type congé ou arrondis
- la distance Hp entre ladite face supérieure et l'axe central I desdites cordes est comprise entre 1 et 6 mm,
- le rapport entre la hauteur de la courroie H, définie comme la distance entre la face supérieure et la face inférieure, et ladite Hp est compris entre 0,1 et 0,6.

2. Courroie pour CVT (1) selon la revendication 1, **caractérisée en ce que** ledit rapport entre l'épaisseur et la Hp est compris entre 0,1 et 0,4.

3. Courroie pour CVT (1) selon les revendications 1 ou 2, **caractérisée en ce qu'**elle comprend une denture supérieure (4) sur la face supérieure et une denture inférieure (5) sur la face inférieure.

4. Courroie pour CVT (1) selon l'une quelconque des revendications précédentes, **caractérisée en ce que** ladite denture supérieure (4) et ladite denture inférieure (5) présentent des pas différents.

5. Courroie pour CVT (1) selon l'une quelconque des revendications précédentes, **caractérisée en ce que** ladite denture supérieure (4) présente un pas compris entre 5 et 15 mm.

6. Courroie pour CVT (1) selon l'une quelconque des revendications 3 à 5, **caractérisée en ce que** ladite denture inférieure (5) présente un pas compris entre 5 et 12 mm.

7. Courroie pour CVT (1) selon l'une quelconque des revendications précédentes, **caractérisée en ce que** ladite largeur supérieure projetée Wp est comprise entre 15 et 45 mm.

8. Courroie pour CVT (1) selon l'une quelconque des revendications précédentes, **caractérisée en ce que** ladite largeur inférieure est comprise entre 12 et 42 mm.

9. Courroie pour CVT (1) selon l'une quelconque des revendications précédentes, **caractérisée en ce que** ledit angle alfa est compris entre 24° et 30°.

10. Courroie pour CVT (1) selon l'une quelconque des revendications précédentes, **caractérisée en ce que** ladite denture supérieure (4) et ladite denture inférieure (5) sont recouvertes d'un tissu.

11. Courroie pour CVT (1) selon l'une quelconque des revendications précédentes, **caractérisée en ce que** ledit corps (2) comprend des fibres réparties uniformément dans le corps de la face supérieure à la face inférieure.

12. Courroie pour CVT (1) selon la revendication 11, **caractérisée en ce que** lesdites fibres sont présentes selon un pourcentage en poids par rapport au poids total du corps allant de 1 à 20 %.

13. Courroie pour CVT (1) selon l'une quelconque des revendications précédentes, **caractérisée en ce que** lesdites fibres sont des fibres coupées.

14. Courroie pour CVT (1) selon l'une quelconque des revendications précédentes, **caractérisée en ce que** lesdites fibres sont en polyamide aliphatique ou aromatique.

15. Courroie pour CVT selon l'une quelconque des revendications précédentes, **caractérisée en ce que** la rigidité est supérieure à 7 000 N/mm lorsqu'elle est mesurée avec une charge de 500 N, en appliquant une charge dynamique de ± 100 N à une fréquence de 10 Hz lors de l'utilisation d'une machine d'essai.
